# EUROPEAN PATENT APPLICATION

(11) **EP 4 403 609 A1**
(43) Date of publication of application: **24.07.2024**
(21) Application number: 22869673.8
(22) Date of filing: 30.06.2022
(51) Int. Cl.: C09K 3/10, C08K 3/011, C08L 21/00, C08L 91/08

(54) **SEALANT MATERIAL COMPOSITION AND TIRE OBTAINED USING SAME**

(30) Priority: 15.09.2021 JP 2021150111
(71) Applicant: The Yokohama Rubber Co., Ltd., Hiratsuka-shi, Kanagawa 254-8601 (JP)
(72) Inventor: KARASAWA, Yuichiro, Hiratsuka-shi, Kanagawa 254-8601 (JP); SAIKI, Takeaki, Hiratsuka-shi, Kanagawa 254-8601 (JP)
(74) Representative: Grünecker Patent- und Rechtsanwälte PartG mbB
(86) International application number: PCT/JP2022/026175
(87) International publication number: WO 2023/042524

(57) **Abstract**

A sealant composition according to the present invention contains (A) a rubber component, (B) a plasticizer, and (C) a crosslinking component. An amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, is 1000% or less.

## Description

### Technical Field

The present invention relates to a sealant composition and a tire using the same.

### Background Art

Among pneumatic tires, a pneumatic tire is known that is provided with a sealant layer disposed on an inner side of an innerliner layer in a tire radial direction in a tread portion. In such a pneumatic tire, when foreign matter such as a nail or the like penetrates into the tread portion, a sealant flows into a through-hole, which makes it possible to suppress a decrease in air pressure and to maintain travel.

For example, Patent Document 1 describes a self-sealing elastomer composition for use as a puncture preventative layer in an inflatable article, which includes at least an unsaturated diene elastomer as a main elastomer having a content of a repeating unit derived from a conjugated diene greater than 30 mol%, hydrocarbon resin having a mass content between 30 phr and 90 phr, a liquid plasticizer having a glass transition temperature (Tg) lower than - 20°C and a mass content of 5 phr to less than 60 phr, and a filler having a mass content from 0 to less than 30 phr.

### Citation List

### Patent Literature

Patent Document 1: JP 5525522 B

### Summary of Invention

### Technical Problem

However, in the related art described above, there is room for improvement in the sealing properties against through-holes formed when foreign matter such as nails or the like penetrate into the tread portion. On the other hand, to improve the sealing properties, it is necessary to ensure that the soft sealant composition does not flow during tire travel. However, in the technology of the related art described above, the sealant composition unfortunately flows toward the center of the tire tread in a width direction, and a solution for this issue is in demand.

An object of the present invention is to solve the aforementioned issues.

### Solution to Problem

As a result of diligent research, the present inventors found that the issues described above can be solved by a sealant composition produced by blending a rubber component, a plasticizer, and a crosslinking component, the sealant composition having, when shear stress is applied under specific conditions, an amount of deformation (strain) of a specific value or less, and thus the present invention can be completed.

That is, the present invention provides a sealant composition constituting a sealant layer of a pneumatic tire provided with the sealant layer on a tire inner surface. The sealant composition contains:
(A) a rubber component;
(B) a plasticizer; and
(C) a crosslinking component.

An amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, is 1000% or less.

### Advantageous Effects of Invention

A sealant composition according to an embodiment of the present invention blends (A) a rubber component, (B) a plasticizer, and (C) a crosslinking component. An amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, may be 1000% or less. According to this configuration, the amount of deformation (strain) of the sealant composition during tire travel is appropriately adjusted, making it possible to solve the issue of the sealant composition flowing toward the center of the tire tread in the width direction during tire travel. Accordingly, the sealing properties against a through-hole formed when foreign matter such as a nail penetrates into the tread portion are improved.

### Brief Description of Drawings

FIG. 1 is a diagram for explaining measurement of an amount of deformation.
FIG. 2 is a schematic graph showing that the relationship between shear stress and the amount of deformation varies among a sealant composition in the related art and sealant compositions according to embodiments of the present invention.

### Description of Embodiments

The present invention will be described in further detail below.

### (A) Rubber Component

Examples of a rubber component (A) used in an embodiment of the present invention include diene rubber such as natural rubber (NR), synthetic isoprene rubber (IR), butadiene rubber (BR), styrene-butadiene copolymer rubber (SBR), acrylonitrile-butadiene copolymer rubber (NBR), ethylenepropylene-diene terpolymer (EPDM), and butyl rubber. These may be used alone, or two or more may be used in combination.

In particular, from the perspective of improving the effects of the present invention, the rubber component (A) is preferably NR, IR, SBR, BR, or a blend thereof.

### (B) Plasticizer

Examples of the plasticizer used in an embodiment of the present invention include a carboxylic acid ester plasticizer, a phosphoric acid ester plasticizer, a sulfonic acid ester plasticizer, oil, and liquid rubber.

Examples of the carboxylic acid ester plasticizer include known phthalic acid esters, isophthalic acid esters, tetrahydrophthalic acid esters, adipic acid esters, maleic acid esters, fumaric acid esters, trimellitic acid esters, linoleic acid esters, oleic acid esters, stearic acid esters, and ricinoleic acid esters.

Examples of the phosphoric acid ester plasticizer include known trimethyl phosphate, triethyl phosphate, tributyl phosphate, tri(2-ethylhexyl) phosphate, 2-ethylhexyl diphenyl phosphate, tributoxyethyl phosphate, triphenyl phosphate, cresyl diphenyl phosphate, isodecyl diphenyl phosphate, tricresyl phosphate, tritolyl phosphate, trixylenyl phosphate, tris(chloroethyl) phosphate, and diphenyl mono-o-xenyl phosphate.

Examples of the sulfonic acid ester plasticizer include known benzene sulfone butylamide, toluenesulfonamide, N-ethyl-toluenesulfonamide, and N-cyclohexyl-p-toluenesulfonamide.

Examples of the oil include known mineral oils such as paraffin-based process oil, naphthene-based process oil, and aromatic process oil.

Examples of the liquid rubber include liquid polyisoprene, liquid polybutadiene, and liquid polystyrene butadiene, and a weight average molecular weight thereof is preferably from 1000 to 100000, and more preferably from 1500 to 75000. Note that the weight average molecular weight in the present invention refers to a value or a weight average molecular weight determined by gel permeation chromatography (GPC) in terms of calibration with polystyrene. Note that the liquid rubber used in the present invention is liquid at 23°C. As a result, the liquid rubber is distinguished from the aforementioned rubber component that is solid at this temperature.

Of the rubbers described above, oil or liquid rubber is preferable as the plasticizer from the perspective of improving the effects of the present invention.

### (C) Crosslinking Component

Examples of the crosslinking component used in an embodiment of the present invention include sulfur and a vulcanization accelerator as components to improve sealing properties.

Examples of the vulcanization accelerator used in an embodiment of the present invention include known sulfenamide-based, thiazole-based, guadinine-based, thiourea-based, dithiocarbamate-based, xanthogenate-based, and thiuram-based vulcanization accelerators. In particular, one or more types selected from a sulfenamide-based vulcanization accelerator and a thiazole-based vulcanization accelerator are preferred from the perspective of ease of adjusting the amount of deformation (strain) described below to the range specified in the present invention.

As a suitable form, the sealant composition according to an embodiment of the present invention can be blended with a tackifier. Examples of a tackifier include a hydrocarbon resin. Examples of the hydrocarbon resin include petroleum resin such as aromatic hydrocarbon resin that is manufactured by polymerizing components produced by performing treatments such as distillation, decomposition, and reforming on crude oil, or petroleum resin such as saturated or unsaturated hydrocarbon resin. Examples of the petroleum resin include C5 petroleum resin (aliphatic petroleum resin formed by polymerizing fractions such as isoprene, 1,3-pentadiene, cyclopentadiene, methylbutene, and pentene), C9 petroleum resin (aromatic petroleum resin formed by polymerizing fractions such as α-methylstyrene, o-vinyl toluene, m-vinyl toluene, and p-vinyl toluene), and C5C9 copolymer petroleum resin.

Further, a glass transition temperature (Tg) of the tackifier is preferably higher than 0°C. By specifying Tg as just described, fluidity is improved. The glass transition temperature (Tg) in an embodiment of the present invention refers to a temperature at the midpoint of the transition region obtained by performing a thermography measurement with differential scanning calorimetry (DSC) at a rate of temperature increase of 20°C/minute.

The aforementioned Tg is more preferably 30°C or higher and 90°C or lower.

Further, the number average molecular weight of the tackifier is preferably from 400 to 2000. Having a number average molecular weight in this range improves adhesive force.

### Blending Ratio of Sealant Composition

In the sealant composition according to an embodiment of the present invention, a blended amount of the plasticizer (B) is, for example, from 20 to 100 parts by mass, preferably from 30 to 90 parts by mass per 100 parts by mass of the rubber component (A).

Further, in the sealant composition according to an embodiment of the present invention, a blended amount of the crosslinking component (C) is, for example, in terms of the total amount of the sulfur and the vulcanization accelerator, 1.0 parts by mass or more, preferably from 1.0 to 3.0 parts by mass, and more preferably from 1.5 to 2.5 parts by mass per 100 parts by mass of the rubber component (A).

Note that the blended amount of the vulcanization accelerator is, for example, 0.5 parts by mass or more, preferably from 0.5 to 2.5 parts by mass, and more preferably from 0.5 to 1.5 parts by mass per 100 parts by mass of the rubber component (A).

Further, in the sealant composition according to an embodiment of the present invention, a blended amount of the tackifier is, for example, from 10 to 100 parts by mass, preferably from 20 to 80 parts by mass per 100 parts by mass of the rubber component (A).

### Additional Components

In addition to the aforementioned components, various additives such as a vulcanizing or crosslinking agent, a vulcanizing or cross-linking accelerator, zinc oxide, an anti-aging agent, and carbon black can be blended in the sealant composition according to an embodiment of the present invention. Such additives can be kneaded by a typical method to form a composition, and a blended amount of the additives can be a typical blended amount in the related art unless contrary to the object of the present invention.

When sulfur is blended as a vulcanizing agent, the sealant composition according to an embodiment of the present invention can be dynamically crosslinked.

In the sealant composition of an embodiment of the present invention, the complex viscosity at 30°C is preferably from 1000 to 20000 Pa·s. When the complex viscosity at 30°C is 1000 Pa s or more, the sealant composition does not excessively flow, excellent fluidity is achieved, and deterioration of sealing properties can be prevented. Further, the complex viscosity being 20000 Pa·s or less has the effect of achieving good sealing properties. The complex viscosity at 30°C is preferably from 3000 to 15000 Pa·s, and more preferably from 5000 to 10000 Pa·s.

Note that the complex viscosity can be measured by a method according to American Society for Testing and Materials D4440.

With the sealant composition according to an embodiment of the present invention, an amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, may be 1000% or less.

The amount of deformation of the sample is measured under the following conditions.

Measuring device: Dynamic viscoelasticity measuring instrument ARES-G2 available from TA Instruments Inc.
Jigs: Parallel plates with 8-mm diameter
Sample thickness: 1.2 mm
Shear stress: 3000 Pa
Time: 60 minutes

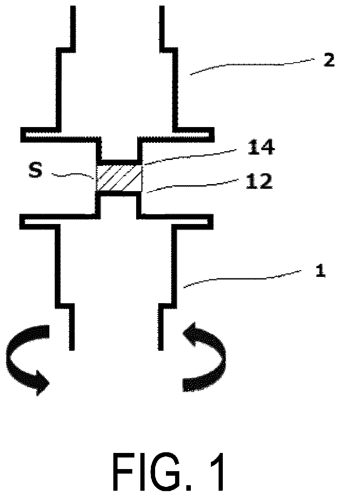

Hereinafter, measurement of the amount of deformation of the sample will be described with reference to FIG. 1.

The measuring device includes, as main portions, a jig 1 that is rotatable and a jig 2 facing the jig 1. The jig 1 includes a parallel plate 12 and the jig 2 includes a parallel plate 14. First, a sample S of the sealant composition having a thickness of 1.2 mm is placed on the parallel plate 12 having a diameter of 8 mm, and the sample S is fixed between the parallel plate 12 and the other parallel plate 14. The sample S has a thickness of 1.2 mm. The parallel plate 12 only is rotated, a shearing stress of 3000 Pa is applied in the rotation direction for 60 minutes, and the amount of deformation (strain) of the sample S after the 60 minutes is measured. The temperature in the measurement chamber is set to 80°C.

In the present invention, the amount of deformation of the sample described above may be achieved by, for example, adjusting the total of the blended amounts of the sulfur and the vulcanization accelerator as well as the blended amount of the vulcanization accelerator to the preferred ranges described above, and adjusting the blended amount of the plasticizer to the preferred range described above.

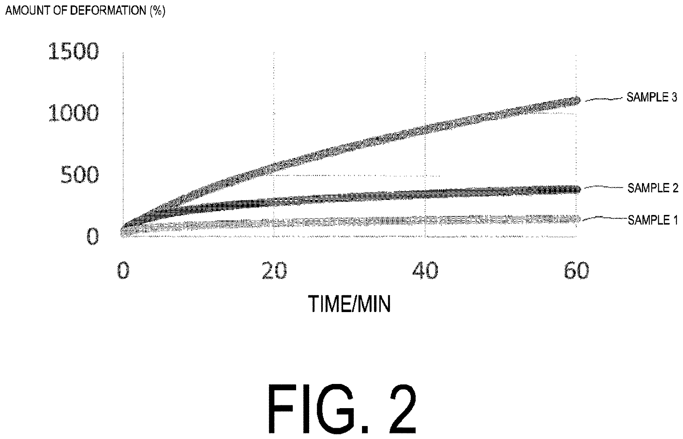

FIG. 2 is a schematic graph showing that the relationship between shear stress and the amount of deformation varies among a sealant composition in the related art and sealant compositions according to embodiments of the present invention. As shown in FIG. 2, when the shear stress described above is applied to the sealant composition (sample 3) in the related art, the amount of deformation increases with time and exceeds 1000% in 60 minutes. In the sealant composition in the related art, the sealant composition flows toward the center of the tire tread in the width direction due to tire travel as described above, and desired sealing properties cannot be exhibited. On the other hand, in the sealant compositions according to embodiments of the present invention (samples 1, 2), the amount of deformation does not reach 1000% even when the shear stress described above is applied for 60 minutes. With such a sealant composition according to an embodiment of the present invention, the flow of the sealant composition during tire travel can be suppressed, and the sealing properties against a through-hole formed when foreign matter such as a nail penetrates into the tread portion can be improved.

As a result of repeating the experiment described above, the present inventors found that there is an interrelationship between the flowability of the sealant composition and the amount of deformation of the sample, thereby completing the present invention.

In the present invention, the amount of deformation is preferably from 100 to 1000%, and more preferably from 100 to 700%.

The sealant composition according to an embodiment of the present invention can be provided as a sealant layer on an inner side of an innerliner layer in a tire radial direction in a tread portion in a pneumatic tire. The sealant layer can be formed by attaching a sheet-shaped molded sealant made of the sealant composition according to an embodiment of the present invention to the entire circumference of the tire inner surface. Alternatively, the sealant layer can be formed by spirally attaching a string-shaped or band-shaped molded sealant made of the sealant composition according to an embodiment of the present invention to the tire inner surface. The sealant can be a vulcanized product. With the sealant layer, when foreign matter such as a nail or the like penetrates into the tread portion, the sealant constituting the sealant layer flows into the through-hole, and as a result, a decrease in air pressure can be suppressed and travel can be maintained. The sealant layer has a thickness of, for example, from 0.5 mm to 5.0 mm.

Note that as long as the amount of oil in the innerliner layer is 3 parts by mass or more per 100 parts by mass of the rubber component containing butyl-based rubber as a main component, oil migration from the sealant layer to the innerliner layer is suppressed and the durability of the tire is maintained, and thus such an amount is preferred.

### Example

The present invention will be described in further detail by way of examples and comparative examples, but the present invention is not limited by these examples. Note that, in the following examples, "parts" means "parts by mass".

### Examples 1 to 15 and Comparative Examples 1 to 3

According to the composition (parts by mass) shown in Table 1, kneading was performed for 40 minutes in a 1.7-L sealed Banbury mixer to produce a rubber composition. Next, the resulting rubber composition was press-vulcanized in a predetermined mold at 180°C for 10 minutes to produce a sealant having a thickness of 3 mm.

The amount of deformation of the sealant produced as described above was measured according to the method described above.

Further, the complex viscosity at 30°C of the sealant produced as described above was measured according to the method described above.

In a pneumatic tire having a tire size of 215/55R17, including a tread portion, a pair of sidewall portions, and a pair of bead portions, and including a sealant layer made of a sealant on an inner side of the innerliner layer in a tire radial direction in the tread portion, the sealant was attached as the sealant layer to manufacture various test tires. The following physical properties were measured for the resulting test tires.

### Fluidity of Sealant:

The test tires were assembled on wheels having a rim size of 16 × 6.5 J, mounted on a drum testing machine, and subjected to high deflection test with an air pressure of 160 kPa, a load of 8.5 kN, and a traveling speed of 80 km/h for 80 hours, and then the flow state of the sealant was examined. The evaluation results were as follows: Given that, when the thickness of the sealant was changed from 3 mm to 1.5 mm or less after testing at each position from the sealant end, it was determined that flow was observed. The case where no flow was observed at a position 1 cm away from the sealant end was indicated by "O", the case where flow was observed at a position 1 cm away from the sealant end and no flow was observed at a position 2 cm away from the sealant end was indicated by "△", and the case where flow was observed at a position 2 cm away from the sealant end was indicated by "×".

The results are shown in Table 1.

**Table 1-1**

| (parts by mass) | | | | |
|---|---|---|---|---|
| | | Comparative Example | | |
| Blend | | 1 | 2 | 3 |
| NR | *1 | 100 | 50 | 60 |
| BR | *2 | | 50 | |
| SBR | *3 | | | 40 |
| Tackifier 1 | *4 | 50 | 50 | |
| Tackifier 2 | *5 | | | 25 |
| Plasticizer 1 | *6 | 15 | 15 | |
| Plasticizer 2 | *7 | | | 60 |
| Plasticizer 3 | *8 | | | |
| Carbon black | *9 | 1 | 1 | |
| Sulfur | *10 | 0.5 | | 0.5 |
| Guanidine-based vulcanization accelerator DPG | *11 | 0.3 | | |
| Thiuram-based vulcanization accelerator TBzTD | *12 | | 3 | |
| Thiazole-based vulcanization accelerator DM | *13 | | | |
| Sulfenamide-based vulcanization accelerator CZ | *14 | | | 0.4 |
| Complex viscosity (Pa•S) | | 9100 | 8500 | 4920 |
| Amount of deformation (%) | | 1100 | 1150 | 1800 |
| Flowability | | × | × | × |

**Table 1-2**

| (parts by mass) | | | | | | | | | |
|---|---|---|---|---|---|---|---|---|---|
| | | Example | | | | | | | |
| Blend | | 1 | 2 | 3 | 4 | 5 | 6 | 7 | 8 |
| NR | *1 | 60 | 60 | 60 | 60 | 60 | 60 | 60 | 60 |
| BR | *2 | | | | | | | | |
| SBR | *3 | 40 | 40 | 40 | 40 | 40 | 40 | 40 | 40 |
| Tackifier 1 | *4 | | | | | | | | |
| Tackifier 2 | *5 | 25 | 25 | 25 | 25 | 25 | 25 | 25 | 25 |
| Plasticizer 1 | *6 | | | | | | | | |
| Plasticizer 2 | *7 | 60 | 60 | 60 | 60 | 60 | 60 | 60 | 60 |
| Plasticizer 3 | *8 | | | | | | | | |
| Carbon black | *9 | | | | | | | | |
| Sulfur | *10 | 0.5 | 0.75 | 1 | 1 | 1.25 | 0.4 | 0.5 | 0.5 |
| Guanidine-based vulcanization accelerator DPG | *11 | | | | | | | | |
| Thiuram-based vulcanization accelerator TBzTD | *12 | | | | | | | | |
| Thiazole-based vulcanization accelerator DM | *13 | 1 | 1 | 0.5 | 1 | 1 | | | |
| Sulfenamide-based vulcanization accelerator CZ | *14 | | | | | | 0.8 | 0.5 | 0.8 |
| Complex viscosity (Pa•S) | | 7090 | 6800 | 8020 | 6500 | 5080 | 6250 | 6500 | 5900 |
| Amount of deformation (%) | | 390 | 120 | 260 | 150 | 140 | 820 | 900 | 570 |
| Flowability | | ⊚ | ⊚ | ⊚ | ⊚ | ⊚ | ○ | ○ | ⊚ |

**Table 1-3**

| (parts by mass) | | | | | | | | |
|---|---|---|---|---|---|---|---|---|
| | | Example | | | | | | |
| Blend | | 9 | 10 | 11 | 12 | 13 | 14 | 15 |
| NR | *1 | 60 | 60 | 60 | 60 | 60 | 60 | 100 |
| BR | *2 | | | | | | | |
| SBR | *3 | 40 | 40 | 40 | 40 | 40 | 40 | |
| Tackifier 1 | *4 | | | | | | | |
| Tackifier 2 | *5 | 25 | 25 | 25 | 25 | 60 | 60 | |
| Plasticizer 1 | *6 | | | | | | | |
| Plasticizer 2 | *7 | 60 | 60 | 60 | 90 | 30 | 60 | |
| Plasticizer 3 | *8 | | | | | | | 100 |
| Carbon black | *9 | | | | | | | 10 |
| Sulfur | *10 | 1 | 0.5 | 0.5 | 0.5 | 0.5 | 0.5 | 1.25 |
| Guanidine-based vulcanization accelerator DPG | *11 | | | | | | | |
| Thiuram-based vulcanization accelerator TBzTD | *12 | | | | | | | |
| Thiazole-based vulcanization accelerator DM | *13 | | | 0.3 | 1 | 1 | 1 | 1 |
| Sulfenamide-based vulcanization accelerator CZ | *14 | 0.8 | 0.6 | 0.3 | | | | |
| Complex viscosity (Pa•S) | | 4800 | 6100 | 5950 | 7350 | 8500 | 5570 | 2700 |
| Amount of deformation (%) | | 350 | 400 | 690 | 950 | 200 | 300 | 350 |
| Flowability | | ⊚ | ⊚ | ⊚ | ○ | ⊚ | ⊚ | ⊚ |

| | | | | | | | | |
|---|---|---|---|---|---|---|---|---|
| *1: NR (SIR20) *2: BR (Nipol 1220 available from Zeon Corporation) *3: SBR (Nipol 1502 available from Zeon Corporation) *4: Tackifier 1 (Escorez 2101, C5/C9 petroleum resin available from Exxon Mobil Corporation) *5: Tackifier 2 (T-REZ RC115, C5 petroleum resin available from ENEOS Corporation) *6: Plasticizer 1 (Ricon 154, liquid butadiene rubber available from Cray Valley) *7: Plasticizer 2 (Diana Process Oil NP250 (naphthene-based process oil) available from Idemitsu Kosan Co., Ltd.) *8: Plasticizer 3 (Diana Process Oil PW-380 (paraffin oil) available from Idemitsu Kosan Co., Ltd.) *9: Carbon black (carbon black N660) *10: Sulfur (Golden Flower oil treated sulfur powder, available from Tsurumi Chemical Industry Co., Ltd.) *11: Guanidine-based vulcanization accelerator DPG (NOCCELER D available from Ouchi Shinko Chemical Industrial Co., Ltd.) *12: Thiuram-based vulcanization accelerator TBzTD (SANCELER TBZTD available from Sanshin Chemical Industry Co., Ltd.) *13: Thiazole-based vulcanization accelerator DM (SANCELER DM-PO available from Sanshin Chemical Industry Co., Ltd.) *14: Sulfenamide-based vulcanization accelerator CZ (NOCCELER CZ-G, available from Ouchi Shinko Chemical Industrial Co., Ltd.) | | | | | | | | |

From the results in Table 1, the sealant composition of each Example contained (A) a rubber component, (B) a plasticizer, and (C) a crosslinking component, and an amount of deformation of a sample made of the sealant composition and having a thickness of 1.2 mm, when the sample was placed on a parallel plate having a diameter of 8 mm and a shear stress of 3000 Pa was applied in a rotation direction of the parallel plate for 60 minutes, was 1000% or less, improving flowability.

On the other hand, in each of the Comparative Examples 1 to 3, the amount of deformation exceeded 1000%, deteriorating flowability.

The present disclosure includes the following embodiments.

Embodiment 1: A sealant composition constituting a sealant layer of a pneumatic tire provided with the sealant layer on a tire inner surface, the sealant composition containing:
(A) a rubber component;
(B) a plasticizer; and
(C) a crosslinking component,
an amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, being 1000% or less.

Embodiment 2: The sealant composition according to Embodiment 1, in which the amount of deformation is 700% or less.

Embodiment 3: The sealant composition according to Embodiment 1 or 2, in which a complex viscosity at 30°C of the sealant composition is from 1000 to 20000 Pa·s.

Embodiment 4: The sealant composition according to any one of Embodiments 1 to 3, in which the crosslinking component (C) contains sulfur and a vulcanization accelerator, and a total of a blended amount of the sulfur and a blended amount of the vulcanization accelerator is 1.0 parts by mass or more per 100 parts by mass of the rubber component.

Embodiment 5: The sealant composition according to Embodiment 4, in which the blended amount of the vulcanization accelerator is 0.5 parts by mass or more per 100 parts by mass of the rubber component.

Embodiment 6: The sealant composition according to Embodiment 4 or 5, in which the vulcanization accelerator is a sulfenamide-based and/or a thiazole-based vulcanization accelerator.

Embodiment 7: The sealant composition according to any one of Embodiments 1 to 6, in which the rubber component (A) is natural rubber, synthetic isoprene rubber, styrene-butadiene copolymer rubber, butadiene rubber, or a blend of these rubbers.

Embodiment 8: The sealant composition according to any one of Embodiments 1 to 7, in which the plasticizer (B) is oil or liquid rubber, and a blended amount of the oil or the liquid rubber is from 20 to 100 parts by mass per 100 parts by mass of the rubber component.

Embodiment 9: The sealant composition according to Embodiment 8, in which the oil is paraffin-based process oil, naphthene-based process oil, or aromatic process oil.

Embodiment 10: The sealant composition according to Embodiment 8 or 9, in which the liquid rubber is liquid polyisoprene, liquid polybutadiene, or liquid polystyrene butadiene.

Embodiment 11: The sealant composition according to any one of Embodiments 8 to 10, in which a weight average molecular weight of the liquid rubber is from 1000 to 100000.

Embodiment 12: The sealant composition according to any one of Embodiments 1 to 11, further containing a tackifier, the tackifier being a hydrocarbon resin, and a blended amount of the hydrocarbon resin being from 10 to 100 parts by mass per 100 parts by mass of the rubber component.

Embodiment 13: The sealant composition according to Embodiment 12, in which the tackifier is C5 petroleum resin, C9 petroleum resin, or C5C9 copolymer petroleum resin.

Embodiment 14: The sealant composition according to Embodiment 12 or 13, in which a glass transition temperature (Tg) of the tackifier is higher than 0°C.

Embodiment 15: A tire using the sealant composition according to any one of Embodiments 1 to 14.

## Claims

1. A sealant composition constituting a sealant layer of a pneumatic tire provided with the sealant layer on a tire inner surface, the sealant composition comprising:
(A) a rubber component;
(B) a plasticizer; and
(C) a crosslinking component,
an amount of deformation of a sample made of the sealant composition and having a thickness of 1.2 mm, when the sample is placed on a parallel plate having a diameter of 8 mm and a shear stress of 3000 Pa is applied in a rotation direction of the parallel plate for 60 minutes, being 1000% or less.

2. The sealant composition according to claim 1, wherein the amount of deformation is 700% or less.

3. The sealant composition according to claim 1, wherein a complex viscosity at 30°C of the sealant composition is from 1000 to 20000 Pa s.

4. The sealant composition according to claim 1, wherein the crosslinking component (C) comprises sulfur and a vulcanization accelerator, and a total of a blended amount of the sulfur and a blended amount of the vulcanization accelerator is 1.0 parts by mass or more per 100 parts by mass of the rubber component.

5. The sealant composition according to claim 4, wherein the blended amount of the vulcanization accelerator is 0.5 parts by mass or more per 100 parts by mass of the rubber component.

6. The sealant composition according to claim 4, wherein the vulcanization accelerator is a sulfenamide-based vulcanization accelerator and/or a thiazole-based vulcanization accelerator.

7. The sealant composition according to claim 1, wherein the rubber component (A) is natural rubber, synthetic isoprene rubber, styrene-butadiene copolymer rubber, butadiene rubber, or a blend of these rubbers.

8. The sealant composition according to claim 1, wherein the plasticizer (B) is oil or liquid rubber, and a blended amount of the oil or the liquid rubber is from 20 to 100 parts by mass per 100 parts by mass of the rubber component.

9. The sealant composition according to claim 8, wherein the oil is paraffin-based process oil, naphthene-based process oil, or aromatic process oil.

10. The sealant composition according to claim 8, wherein the liquid rubber is liquid polyisoprene, liquid polybutadiene, or liquid polystyrene butadiene.

11. The sealant composition according to claim 8, wherein a weight average molecular weight of the liquid rubber is from 1000 to 100000.

12. The sealant composition according to claim 1, further comprising a tackifier, the tackifier being a hydrocarbon resin, and a blended amount of the hydrocarbon resin being from 10 to 100 parts by mass per 100 parts by mass of the rubber component.

13. The sealant composition according to claim 12, wherein the tackifier is C5 petroleum resin, C9 petroleum resin, or C5C9 copolymer petroleum resin.

14. The sealant composition according to claim 12, wherein a glass transition temperature (Tg) of the tackifier is higher than 0°C.

15. A tire using the sealant composition according to claim 1.
